# EUROPÄISCHE PATENTANMELDUNG

(11) **EP 1 256 613 A2**
(43) Veröffentlichungstag der Anmeldung: **13.11.2002**
(21) Anmeldenummer: 02008976.9
(22) Anmeldetag: 23.04.2002
(51) Int. Cl.: C09J 7/02

(54) **Klebestreifen**

(30) Priorität: 10.05.2001 DE 10122751
(71) Anmelder: Tesa AG, 20253 Hamburg (DE)
(72) Erfinder: Zimmermann, Dieter, 21635 Jork (DE); Schulze, Walter, 25421 Pinneberg (DE)

(57) **Zusammenfassung**

Klebestreifen mit klebendem Bereich und Anfasser für eine rückstandsfrei und zerstörungsfrei und wiederablösbare Verklebung, wobei der Klebestreifen ein solcher ist, der durch Ziehen /Verstrecken in der Verklebungsebene lösbar ist, dadurch gekennzeichnet, daß der Anfasser an dem durch Ziehen/Verstrecken in der Verklebungsebene die Verklebung wieder lösbar ist, durch einen auf die Klebmasse des Klebestreifens aufgedruckten und gehärteten UV-Lack ausgebildet ist.

## Beschreibung

Die Erfindung betrifft einen Klebestreifen für rückstandsfrei und zerstörungsfrei wiederablösbare Verklebungen durch Ziehen/Verstrecken in der Verklebungsebene sowie seine Verwendung.
Hochdehnbare elastisch oder plastisch unter Verstreckung deformierende, einseitig oder beidseitig haftklebrige Selbstklebebänder (Klebstoff-Folien), die durch Ziehen im wesentlichen in Richtung ihrer Verklebungsebene rückstands- und zerstörungsfrei wiederablöbar sind, sind bekannt. Mit ihnen hergestellte Verklebungen bieten kraftvollen Halt und lassen sich doch spurlos wiederablösen, sei es mit nur geringer Beschädigung des Untergrundes oder der Fügeteile oder gar ohne. Beispielhafte Klebebänder vorgenannter Art sind in US 4,024,312, DE 33 31 016, DE 42 22 849, WO 92/11332, WO 92/11333, US 5,516,581 und WO 95/06691 beschrieben.

Eine häufige Konfektionierform entsprechender Produkte sind Selbstklebebandzuschnitte, zum Beispiel in Form rechteckiger Streifen, welche an einem Ende einen klebfreien Anfasserbereich besitzen (siehe DE 42 22 849, WO 92/11333 bzw. US 5,516,581). Der Anfasser dient als Grifffläche für ein späteres Wiederablösen des Klebebandes. Im Handel sind solche Produkte unter der Bezeichnung "tesa Power-Strips®" erhältlich.

Praktische Probleme mit o.g. Produkten treten dann auf, wenn im Falle von doppelseitig haftklebrigen Selbstklebebändern das Selbstklebeband beim Ablöseprozeß reißt. Dieser Problematik nehmen sich insbesondere DE 42 22 849, DE 44 28 587 und DE 44 31 914 an. In der DE 42 22 849 beschriebene Klebebänder nutzen UV-undurchlässige Anfasserabdeckungen, welche die Reißemeigung im Anfasserbereich nach UV-Exposition reduzieren bzw. verhindern sollen. In der DE 44 28 578 beschriebene Klebebänder verfügen über ein besonders ausgeformtes Ende, welches einem partiellen Reißen des Klebebandes zum Ende des Ablöseprozesses entgegenwirkt. DE 44 31 914 beschreibt Klebebänder, welche im Anfasserbereich u.a. spezielle Folien- oder Papierabdeckungen aufweisen, die eine geringe Adhäsion zur verwendeten Selbstklebemasse besitzen, wodurch die Reißerneigung im Bereich des klebfreien Anfassers reduziert wird. Eine allgemeine Lösung der Reißerproblematik steht dennoch aus.

In DE 198 49 199 A1, werden derartige Klebestreifen beschrieben, bei denen der Anfasser umgelegt angeordnet ist, um die Verklebung und das zugehörige Material, etwa einen Haken oder eine Basisplatte, möglicht klein gestalten zu können. Dieser Anfasser kann auch durch Bedrucken der Klebmasse inertisiert sein, ohne damit jedoch Hinweise auf damit ggf. zu erzielende anderweitige Effekte zu geben.

Aufgabe der Erfindung war es, einen Anfasser für derartige Klebestreifen zu schaffen, der zum einen hilft, Reißer weiter zu verhindern oder zu vermindem, der aber zugleich gut anzufassen ist, ohne beim Ziehen davon abzurutschen.

Gelöst wird diese Aufgabe durch einen Klebestreifen, wie er näher in den Ansprüchen gekennzeichnet ist. Um Wiederholungen zu vermeiden, wird auf die Ansprüche ausdrücklich Bezug genommen.

Für die einzusetzenden Klebmassen der Klebstreifen wird auf den Stand der Technik verwiesen, insb. auf DE 33 31 016 und besonders dort das Bespiel. Aber auch Produkte gemäß WO 92/11332, WO 92/11333 und weitere sind erfindungsgemäß geeignet. Zur Herstellung, Bearbeitung und Anwendung wird ausdrücklich auf den einleitend genannten Stand der Technik Bezug genommen.

Der eingesetzte Lack ist insbesondere ein solcher, der im Flexodruck eingesetzt werden kann. Solche Lacke sind im Handel erhältlich.

### Beispiel

Hierfür wurde eine 0,6 mm dicke Klebfolie gemäß Beispiel aus DE 33 31 016 wie folgt behandelt:

Zum Druckeinsatz kommt ein kationisch-aushärtbarer UV-Lack SICPA 360076 von Fa. SICPA/Aarberg, der blau angetönt wird. Durch Beimischung von 5 Gew.-% Zylinderabstoßmittel wir die Druckfarbe für die Verarbeitung optimiert. Mittels einer UV-Flexodruckmaschnine ARSOMA em 410 wird die Klebfolie bei einer Maschinengeschwindigkeit von 30m/min. über eine Flexodruckstation bedruckt. Die genau definierte Farbübertragung auf das Flexodruckklischee erfolgt mittels einer entsprechenden Rasterwalze im Negativ-Rakelverfahren. Es erfolgt danach die Farbübertragung vom Klischee auf das Foliensubstrat in einer Farbmenge von 10g/m².

Der Farbauftrag auf dem Foliensubstrat wird durch leistungsstarke UV-Strahlerröhren ausgehärtet. Hierfür wurde eine UV-Station Micro UV-Station GEW mit einer Strahlerleistung von 110W/cm und einer Wellenlänge von 365 nm eingesetzt. In einem weiteren Versuch wurden 28g/m² Lack aufgetragen.

Bedruckte und unbedruckte Muster wurden dann mit einer Solila-Lampe (Osram, Ultra-Vitalut, 300 W, 220-230 V, E27) eine Woche lang bei 40° C bestrahlt:

Danach erfolgte die Reißkraft-(nach Afera 4004/DIN EN 1940) und
Reißdehnungsmesung (nach Afera 4005/DIN EN 1941):
1. Bedrucktes Muster mit 10g/m² =
   Reißkraft: 53 N/cm
   Reißdehnung: 675%
2. Bedrucktes Muster mit 28g/m² =
   Reißkraft: 78N/cm
   Reißdehnung: 745%
3. Material "1" ohne Lack: (1 Woche Solila-Bestrahlung):
   Reißkraft: 23 N/cm
   Reißdehnung: 680 %
4. Material "2" ohne Lack und ohne Bestrahlung:
   Reißkraft: 50 - 60 N/cm
   Reißdehnung: ca. 800%

Der Lackauftrag kann somit eine Anfasserfolie vollwertig ersetzen. Ein erhöhter Lackauftrag (2.Probe) verbessert deutlich die Reißfestigkeit des Dekomaterials durch Bestrahlung. Die Dehnung wird nicht beeinflußt. Und besonders vorteilhaft ist, daß der Lack griffiger ist als eine Folie.

## Patentansprüche

1. Klebestreifen mit klebendem Bereich und Anfasser für eine rückstandsfrei und zerstörungsfrei und wiederablösbare Verklebung, wobei der Klebestreifen ein solcher ist, der durch Ziehen Nerstrecken in der Verklebungsebene lösbar ist, **dadurch gekennzeichnet, daß** der Anfasser an dem durch Ziehen/Verstrecken in der Verklebungsebene die Verklebung wieder lösbar ist, durch einen auf die Klebmasse des Klebestreifens aufgedruckten und gehärteten UV-Lack ausgebildet ist.

2. Klebestreifen nach Anspruch 1, **dadurch gekennzeichnet, daß** der UV-Lack als Flexodruck aufgedruckt ist.

3. Klebestreifen nach Anspruch 1, **dadurch gekennzeichnet, daß** der UV-Lack in einer Menge von 5 - 60g/m², insbesondere 8 - 40 g/m² aufgedruckt ist.

4. Klebestreifen nach Anspruch 1, **dadurch gekennzeichnet, daß** er beidseitig klebend ausgebildet ist und der UV-Lack ebenfalls beidseitig aufgedruckt ist.

5. Klebestreifen nach Anspruch 1, **dadurch gekennzeichnet, daß** der Klebestreifen aus einem hochverstreckbaren, elastisch oder plastisch unter Dehnung verformbaren Material, ggf. mit einem Zwischenträger, insbesondere mit einem Folien- oder Schaumstoff-Zwischenträger besteht.

6. Klebestreifen nach Anspruch 1, **dadurch gekennzeichnet, daß** die Adhäsion der Klebfolie geringer ist als die Kohäsion, das Haftvermögen beim Dehnen der Folie weitgehend verschwindet, und das Verhältnis von Abzugskraft zu Reißlast mindestens 1:1,5 ist.

7. Klebestreifen nach Anspruch 1, **dadurch gekennzeichnet, daß** der Klebestreifen ein solcher auf Basis von thermoplastischem Kautschuk und klebrigmachenden Harzen ist, mit hoher Elastizität und geringer Plastizität.

8. Klebestreifen nach Anspruch 1, **dadurch gekennzeichnet, daß** der Klebestreifen einen Zwischenträger mit beidseitig aufgetragener Acrylatkleberbeschichtung aufweist.

9. Verwendung eines Klebestreifens nach einem der Ansprüche 1 - 8 zum reißerfreien und griffsicheren Ziehen/Verstrecken zwecks Lösen einer mit dem Klebestreifen hergestellten Verklebung.
